Europäisches Patentamt

**European Patent Office**

**Office européen des brevets**

(19)

(11) Veröffentlichungsnummer: **0 040 856**
**A1**

(12) # EUROPÄISCHE PATENTANMELDUNG

(21) Anmeldenummer: **81104070.8**

(22) Anmeldetag: **27.05.81**

(51) Int. Cl.³: **F 16 J 15/32**

(30) Priorität: **27.05.80 DE 3020106**

(43) Veröffentlichungstag der Anmeldung: **02.12.81**
**Patentblatt 81/48**

(84) Benannte Vertragsstaaten: **AT CH DE FR LI**

(71) Anmelder: **Knorr-Bremse GmbH, Moosacher Strasse 80, D-8000 München 40 (DE)**

(72) Erfinder: **Heller, Rudolf, Troppauer Strasse 9, D-8000 München 45 (DE)**

(54) **Elastischer Dichtungsring.**

(57)  Bei einem Kolben (10) besitzt dieser mindestens eine zum Zylinder (9) hin offene radiale Ringnut (12), in die der Dichtungsring (1) eingesetzt ist, der zwischen zwei radialäußeren Ringabschnitten (2 und 3) einen schmalen, in radialer Richtung dehnbaren Mittelsteg (4) aufweist.

Die axialen Stirnflächen (5 und 6) des ersten Ringabschnittes (2) weisen jeweils ein Profil (21 und 22) (radiale Nut) auf, das bei Anlage an einer seitlichen Nutenwand (16 bzw. 17) eine Druckmittelverbindung zwischen dem axialen Ringspalt (8) und dem zweiten Ringabschnitt (3) freilässt.

Knorr-Bremse GmbH
Moosacher Straße 80
8000 München 40

München, 12.5.1980
TP1/pd-er
- 1622 -

Elastischer Dichtungsring

Die Erfindung betrifft einen elastischen Dichtungsring gemäß dem Oberbegriff des Anspruches 1.

Ein Dichtungsring der vorstehenden Art ist durch die DE-OS 21 04 859 bekannt geworden. Durch die besondere Ausbildung des Dichtungsringes wird dieser auch bei unterschiedlichem Druckmitteldrücken in der Ringnut sicher festgehalten. Gleichzeitig wird eine dem jeweiligen Durckmitteldruck entsprechende dichte Anpressung der radialen Dichtfläche des Dichtungsringes an der abzudichtenden Zylinderfläche des einen der beiden relativ zueinander verschieblichen Teile erreicht. In diesem Zusammenhang kommt dem elastischen Mittelsteg zwischen den beiden radialäußeren Ringabschnitten eine besondere Bedeutung zu.

Bei den bekannten Dichtungsringen können Schwierigkeiten insofern auftreten, als der die dachförmige Dichtfläche aufweisende, von in radialen Ebenen liegenden axialen Stirnflächen begrenzte eine Ringabschnitt des Dichtungsringes mit axialem Spiel in der Ringnut liegt. Infolge der Elastizität des Mittelsteges kann dieser Ringabschnitt in der Ringnut verkanten und damit undicht werden, wenn auf seiner einen Seite ein Druckmitteldruck noch nicht vollständig abgebaut ist, um z.B. einen Kolben in seiner einen Endlage zu dämpfen,

- 2 -

BAD ORIGINAL

aber die andere Seite des Dichtungsringes von einem höheren Durckmitteldruck beaufschlagt ist.

Aufgabe der Erfindung ist es daher, einen Dichtungsring der eingangs genannten Art anzubieten, bei dem ein Verkanten in der Ringnut und damit ein hierdurch bedingtes Undichtwerden wieder vermieden wird. Insbesondere ist es Aufgabe der Erfindung, einen Dichtungsring der eingangs genannten Art derart zu verbessern, daß er für gedämpfte Kolben besonders geeignet ist.

Die Aufgabe wird erfindungsgemäß mit dem kennzeichnenden Merkmal des Anspruches eingelöst. Eine vorteilhafte Ausführung nach der Erfindung ergibt sich aus dem Unteranspruch.

Die Erfindung wird anhand eines Ausführungsbeispieles näher beschrieben, das in der schematischen Zeichnung dargestellt ist. Hierin zeigt:

Figur 1 einen erfindungsgemäßen Dichtungsring in einer bevorzugten Ausführungsform als Kolbendichtungsring,

Figur 2 den Dichtungsring nach Figur 1 in einer Kolbenringnut im unbelasteten Zustand und

Figur 3 den Dichtungsring nach Figur 1 in einer Kolbenringnut unter seitlich höherer Druckmitteldruckbeaufschlagung.

Der Dichtungsring 1 besitzt zwischen zwei radialäußeren Ringabschnitten 2 und 3 einen schmäleren, in radialer Richtung dehnbaren Mittelsteg 4. Der eine Ringabschnitt 2 ist axial von zwei in radialen Ebenen

- 3 -

liegenden Stirnflächen 5 und 6 und radial von einer umlaufenden dachförmig abgeschrägten Dichtfläche begrenzt, die den axialen Ringspalt 4 zwischen zwei zylindrischen, konzentrisch zueinander angeordneten und relativ zueinander verschieblichen Teilen 9 und 10 überbrückt und mit in radialer Richtung wirkender elastischer Vorspannung an der zylindrischen Begrenzungswand 11 des einen Teiles 9 anliegt, bei dem es sich um einen Zylinder handeln kann, während der andere Teil 10 ein in seinen Endlagen gedämpfter Kolben mit einer Ringnut 12 ist, in die der Dichtungsring 1 eingesetzt ist.

Der zum Nutengrund weisende Ringabschnitt 3 des Dichtungsringes 1 ist von zwei lippenartigen Dichtungsabschnitten 13, 14 gebildet, die jeweils in Achsrichtung eine axiale Stirnfläche 5 bzw. 6 des Ringabschnittes 2 überragen und zur Abdichtung des Nutengrundes 15 von dem axialen Ringspalt 8 sowie zur Zentrierung des Dichtungsringes in der Ringnut 12 im drucklosen Zustand mit in axialer Richtung wirkender elastischer Vorspannung an den seitlichen Nutenwänden 16 und 17 der Ringnut 12 anliegen. Die jeweils außen liegenden Flächen 18 und 19 sind zumindest teilweise als zum Nutengrund 15 weisende Kegelstumpfflächen ausgebildet, die an eine dem Nutengrund 15 zugewandte umlaufende, im wesentlichen flache Begrenzungsfläche 20 des Dichtungsringes 1 anschließen.

Die axialen Stirnflächen 5 und 6 weisen jeweils eine im wesentlichen radial verlaufende Nut 21, 22 auf.

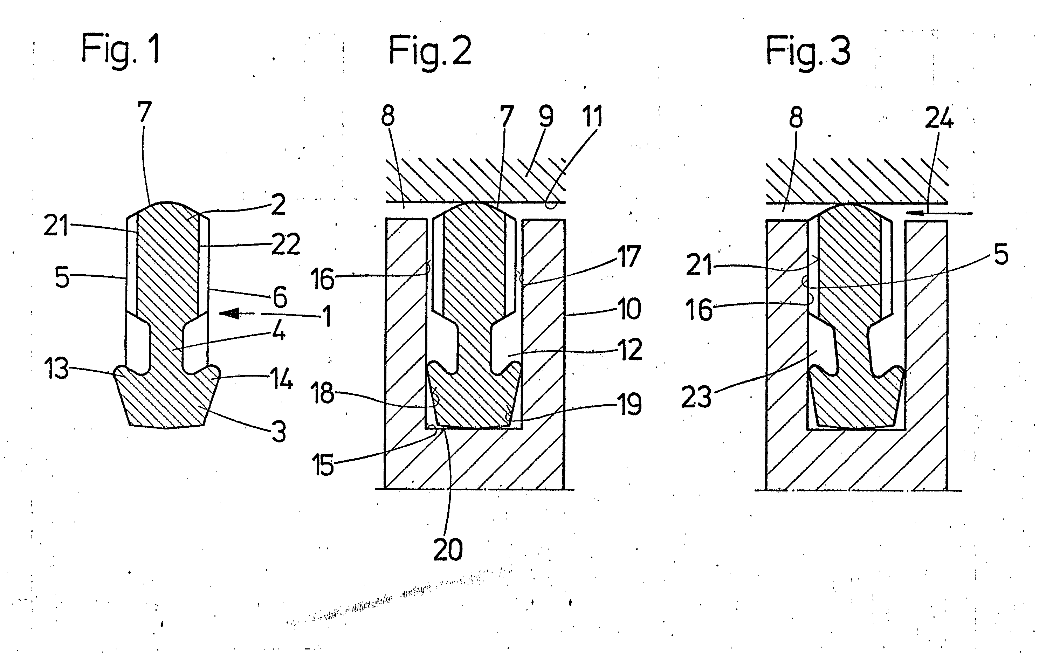

Figur 2 zeigt den erfindungsgemäßen Dichtungsring 1 nach Figur 1 in einer Ringnut 12 eines in seinen Endlagen gedämpften Kolbens 10. Der Außendurchmesser des

- 4 -

Dichtungsringes 1 ist so bemessen, daß die radialäußere Dichtungsfläche 7 unter einer bestimmten radialen Vorspannung an der inneren Zylinderfläche 11 des Zylinders 9 anliegt. Hierbei ist es nicht unbedingt erforderlich, daß auch die radialinnere Begrenzungsfläche 20 auf dem Nutengrund 15 unter elastischer Vorspannung aufsitzt. Der Dichtungsring 1 kann also auch schwimmend in der Ringnut 12 angeordnet sein.

Ist der Dichtungsring über den Ringspalt 8 von seiner einen, z.B. linken Seite (Figur 3) mit einem Restdruck beaufschlagt, der aufgrund einer gewünschten Dämpfung des Kolbens 10 in seinen Endlagen eine bestimmte Höhe aufweist, und ist der Dichtungsring gleichzeitig über dem Ringspalt 8 von seiner anderen, linken Seite mit einem höheren Druck beaufschlagt, um den Kolben 10 nach links zu verschieben, so wird der Dichtungsring 1 etwa die in Figur 3 gezeigte Schrägstellung einnehmen, ohne in der Ringnut 12 zu verkanten und damit gegenüber der Stirnfläche 11 undicht zu werden.

Der Dichtungsring stützt sich dabei mit seiner einen axialen Stirnfläche 9 an der Nutenwand 16 ab, wobei Druckmittel aus dem Ringraum 23 zur einen Seite des Mittelsteges 4 über die Nut 21 und den Ringspalt 8 abströmen kann. Würde mangels einer Nut 21 Druckmittel in dem Ringraum 23 eingesperrt bleiben, während der Dichtungsring 1 in Pfeilrichtung 24 mit einem höheren Druck beaufschlagt wird, dann würde die Gefahr bestehen, daß der Dichtungsring in der Ringnut verkantet und dabei mit seiner Dichtfläche 7 von der Zylinderfläche 11 abhebt.

Der erfindungsgemäße Dichtungsring ist daher für gedämpfte Kolben besonders vorteilhaft. Es ist klar, daß die Stirnflächen 5 und 6 des Dichtungsringes auch andersartige Profile aufweisen können, aufgrund derer eine pneumatische Verbindung zwischen dem Ringspalt 8 und dem Ringraum 23 frei bleibt, wenn er, wie in Figur 3 gezeigt, mit seiner einen Stirnfläche 5 an die Nutenwand 6 angedrückt ist. So können statt Nuten 21 und 22 auch Rippen oder Noppen an den Stirnflächen 5 und 6 vorhanden sein.

Es ist klar, daß die Dichtungsfläche 7 des erfindungsgemäßen Dichtungsringes 1 jede gewünschte Gestalt aufweisen kann. Weiterhin ist klar, daß der erfindungsgemäße Dichtungsring nicht nur als Kolbendichtungsring geeignet ist, der radialaußen dichtend ist. So lassen sich auch entsprechende Dichtungsringe angeben, die gegenüber einer beweglichen zentralen Stange radialinnen dichtend sind und in einem Zylindergehäuse fest angeordnet sind. So kann der Dichtungsring statt der radialen Nut an seinen axialen Stirnflächen auch ein durch eine Beschriftung erzeugtes Profil aufweisen, das den gewünschten Druckausgleich im vorstehend beschriebenen Sinne ermöglicht. Bei der Beschriftung kann es sich um Herstellungskennzeichen für den Dichtungsring handeln. Zweckmäßig ist die Beschriftung über den Umfang gleichmäßig verteilt. Es ist klar, daß die Beschriftung eine solche aus den Stirnflächen hervorragende Stärke aufweisen muß, daß der gewünschte Druckausgleich bei Anlage des Dichtungsringes an einer seitlichen Nutenwand unter Druck auch sicher erreicht wird. Die durch die Beschriftung erzielte erfindungsgemäße Profilierung kann auch durch eine oder mehrere radiale Nuten in den axialen Stirnflächen des Dichtungsringes ergänzt sein. Es ist klar, daß sich dem Fachmanne insoweit vielfältige Variationsmöglichkeiten anbieten.

0040856

Knorr-Bremse GmbH
Moosacher Straße 80
8000 München 40

München, 12.5.1980
TP1/pd-er
- 1622 -

Patentansprüche

1. Elastischer Dichtungsring zum Abdichten eines axialen Ringspaltes zwischen zwei zylindrischen, konzentrisch zueinander angeordneten und relativ zueinander verschiebbaren Teilen, insbesondere für Kolben und Kolbenstangen, von welchen wenigstens das eine Teil mindestens eine zum anderen Teil hin offene radiale Ringnut aufweist, in die der Dichtungsring eingesetzt ist, der zwischen zwei radialäußeren Ringabschnitten einen schmäleren, in radialer Richtung dehnbaren Mittelsteg aufweist, von denen der eine, erste, mit axialem Spiel in der Ringnut liegende Ringabschnitt axial von in radialen Ebenen liegenden Stirnflächen und radial von einer umlaufenden dachförmig abgeschrägten Dichtfläche begrenzt ist, die den axialen Ringspalt überbrückt und mit in radialer Richtung wirkender elastischer Vorspannung an der der Ringnut gegenüberliegenden zylindrischen Begrenzungswand des anderen Teiles anliegt, und der zum Nutengrund weisende andere, zweite Ringabschnitt von zwei lippenartigen Dichtungsabschnitten gebildet ist, die jeweils in Achsrichtung eine axiale Stirnfläche des ersten Ringabschnittes überragen und zur Abdichtung des Nutengrundes von dem axialen Ringspalt sowie zur Zentrierung des Dichtungsringes in der Ringnut in drucklosem Zustand mit in axialer Richtung wirkender elastischer Vorspannung an den seitlichen Nutenwänden der Ringnut anliegen und deren jeweils außen liegenden Flächen zumindest teilweise als zum Nutengrund weisende Kegelstumpfflächen ausgebildet sind, die an eine dem Nutengrund zugewandte umlaufende, im wesentlichen flache Begrenzungsfläche anschließen, dadurch gekennzeichnet, daß die axialen Stirnflächen jeweils ein bei Anlage an einer seitlichen Nutenwand eine Druckmittelverbindung zwischen dem axialen Ringspalt und dem zweiten Ringabschnitt freilassendes Profil aufweisen.

2. Dichtungsring nach Anspruch 1, dadurch gekennzeichnet, daß die axialen Stirnflächen jeweils wenigstens eine im wesentlichen radial verlaufende Nut aufweisen.

Fig. 1

Fig. 2

Fig. 3

0040856

**Europäisches Patentamt**

**EUROPÄISCHER RECHERCHENBERICHT**

## · EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 374 575 (DUNLOP) <br> * Seite 13, Zeile 15 bis Seite 15, Zeile 29; Figur 4 * | 1,2 |

**KLASSIFIKATION DER ANMELDUNG (Int. Cl.³)**

F 16 J 15/32

**RECHERCHIERTE SACHGEBIETE (Int. Cl.³)**

F 16 J

**KATEGORIE DER GENANNTEN DOKUMENTE**

X: von besonderer Bedeutung
A: technologischer Hintergrund
O: nichtschriftliche Öffenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26.08.1981 | LEGER |

EPA form 1503.1   06.78